# EUROPEAN PATENT APPLICATION

(11) **EP 4 660 217 A1**
(43) Date of publication of application: **10.12.2025**
(21) Application number: 25163471.3
(22) Date of filing: 13.03.2025
(51) Int. Cl.: C08G 63/52, C08L 67/02

(54) **A MULTICOMPONENT POLYESTER RESIN COMPOSITION, FOR POTTING AND ENCAPSULATING, AND A REMOVABLE POLYBUTADIENE POLYESTER POTTING COMPOUND MADE THEREFROM**

(30) Priority: 06.06.2024 NL 2037879
(71) Applicant: Filoform B.V., 4191 PH Geldermalsen (NL)
(72) Inventor: LAAMOUMI, El-Miloud, 4191 PH GELDERMALSEN (NL)
(74) Representative: EP&C

(57) **Abstract**

A multicomponent polyester resin composition, which comprises at least one A-Component that comprises at least one polyol, and at least one B-Component that comprises at least one maleic anhydride adduct of a cis-1,4-polybutadiene with a molecular weight in the range of 1,000 to 50,000 (DIN 55 627-1), which has succinic anhydride groups randomly distributed along the polymer chains, wherein the A-Component comprises:
50-80 wt.% partially dehydrated vegetable oil with a viscosity in the range of 400-1000 mPa.s at 25°C (DIN EN ISO 3219) and with a hydroxyl number of 110 to 125 mg KOH/g (DIN EN ISO 4629-2);
0-20 wt.% of one or more fillers;
15-25 wt.% of one or more crosslinking agents;
0.8-1.2 wt.% of one or more dispersants;
1.7-2.1 wt.% of one or more curing agents:
0.5-1.0 wt.% of one or more catalysts, and
0.0-3.0 wt.% antioxidant,
adding up to 100 wt.% and calculated as weight on the A-Component. It also provides encapsulated products and articles wherein the potting compound is used.

## Description

### FIELD OF THE INVENTION

The instant invention relates to removable polybutadiene polyester electronic potting compounds. Such compounds are used for potting & encapsulating, thereby insulating and protecting electronic components from the application and environmental stresses. The invention also relates to a multicomponent resin composition for producing the same.

### BACKGROUND OF THE INVENTION

Potting compounds, for example, epoxy, polyurethane, silicone or polybutadiene potting compounds, are typically used in telecommunication applications to avoid damages by moisture, 1 kV power cable boxes, and for the sealing of many other electronic parts, especially where no mechanical stress is allowed (even at very low temperature).

From the Handbook of composites, Stander, M. (1982). Polybutadiene Resins. In: Lubin, G. (eds) Handbook of Composites. Springer, Boston, MA. https://doi.org/10.1007/978-1-4615-7139-1_4, it is known that polybutadiene resins are high-hydrocarbon-content, thermosetting resins whose excellent electrical properties, excellent chemical resistance, high thermal distortion temperatures, low water absorption, and ready cure with peroxide catalysts make them of interest for many applications. On the basis of these properties, polybutadiene resins are formulated to be used in compression, transfer, and injection molding, in the preparation of pre-pregs, and in wet lay-up laminating. Various polybutadiene derivatives extend their use as resin modifiers, coatings, adhesives, and potting compounds.

For low temperature flexibility typically polybutadiene potting resin compositions, in the form of a two-component system, are used. Such compounds may be used in a temperature range of -60 to 150 °C, with a Share A hardness of 80 +/- 10. Often polybutadiene polyurethanes are used, that have a low glass-transition temperature (less than-40 °C), that are flexible even in very cold conditions; and that have excellent water and moisture resistance; good adhesion on most surfaces; excellent resistance to vibrations and rising temperature; suitable for a wide range of operating temperatures, from - 60°C up to 150°C, and cost-effective substitutes for silicone elastomers up to 150°C operating temperature. However, polybutadiene polyurethanes are typically not label-free.

In the article of January 10, 2023 in ASI Adhesives &Sealants, "Protection of Electric and Electronic Equipment" by Dr. Ingo Stohrer, Dr. Sara Liébana Viñas, the potting compound market is described as being segmented by the polymer type being used, distinguishing between the dominating thermoset epoxies, polyurethanes, silicones and thermoplastic polyesters, polyolefins, polyamides, among others. It is indicated that polyurethanes are applied as two-component systems - one component (A) contains polyols, fillers, additives, and stabilizers, while the other component (B) is often a modified polyisocyanate. Once thoroughly mixed, the working time should be around 15 minutes, but can easily be tweaked to customer needs by adjusting the accelerator percentage or percentages inside component A. The proven A:B mixing ratio (by weight) is around 10:1, but depends heavily on the formulation of the two components. According to these authors, diols suited for electrical potting applications are often based on polybutadiene chemistry (e.g., hydroxl terminated polybutadienes supplied by Evonik Industries under the brand name Polyvest^{®} HT). These polyols exhibit a molecular weight of around 3000 g/mol, have low TGs (-80 °C / -112 °F), contain primary hydroxyl groups, and have functionalities around 2.4. To support higher crosslinking densities, a chain extender with a functionality of around 3 is usually part of the formulation. Kaolin and Wollastonite are fillers of choice. Additives like adhesion promotors, often based on silane chemistry, flow additives, antioxidants, and catalysts complete the formulation of component A. The recommended formulation percentages for component A are 35-40% polybutadiene-based polyol, 6-7% chain extender, and 50-55% fillers. Additives make up the remaining percentage. The viscosity of component A should be around 14 Pas and, as much as possible, shear independent. As regards, component B, producers of potting systems prefer aromatic polyisocyanates, characterized by a functionality of ≥ 2. For economic reasons, component B comes directly "as-is" from a polyisocyanate producer.

In addition to polyurethane based potting compounds also epoxy based compounds are known. For instance, 3M Scotchcast 2123 is a flexible, two-component polybutadiene potting resin that has been specially developed for removable splice protection up to 1 kV. Scotchcast 2123 resin is suitable for all electrical applications requiring a flexible, removable resin with good processing and performance properties. According to the Safety Data Sheet, the composition of the A component comprises 60-75 wt.% soybean oil; 15-30 wt.% butadiene-maleic anhydride copolymer and 1-10 wt.% epoxidized soybean oil, with minor amounts of BHT, maleic anhydride and toluene. According to the Safety Data Sheet, the composition of the B component comprises 65-80 wt.% hydrotreated heavy naphthenic petroleum distillates; 15-30 wt.% hydroxy-terminated 1,3-butadiene homopolymer and 1-10 wt.% methyldidecylamine.

Electronic potting compounds based on low-cost epoxy and polyurethane resin compositions are therefore popular to insulate and protect electronic components from the application and environmental stresses. Many resin compositions are completely solvent-free, making them suitable for preserving sensitive components. Once the liquid is poured over the electronic application or circuit board, the resin composition cures and permanently protects fragile electrical components. The soft potting compounds and electronic encapsulants can also be removed if repairs or modifications are needed.

The CLP Regulation (stands for "Classification, Labelling and Packaging") is a European Union regulation from 2008. It incorporates the classification criteria and labelling rules agreed at the UN level, the so-called Globally Harmonised System of Classification and Labelling of Chemicals (GHS). It introduced new classification criteria, European hazard symbols (pictograms) and Risk and Safety Statements for labelling, while taking into account elements which were part of the prior EU legislation. Ideally a resin composition for use as potting or encapsulation compounds does not fall within the CLP Regulation and is therefore label-free, at least free of epoxy resins, isocyanates and silicones, with at most an indication for the catalyst which is typically used at very minute amounts.

Soft potting compounds of particular interest are prepared from resin compositions using a polybutadiene-based polyol. For instance, Evonik supplies a range of stereospecific, low viscous and unsaponifiable liquid polybutadienes with different chemical compositions under the brand name Polyvest^{®}. Typically, low molecular weight high cis-1,4-polybutadiene polymers have a molecular weight in the range of 1,000-50,000 (determined via GPC according to DIN 55 627-1). The products by Evonik have a molecular weight in the range of 2,000 to 5,000. Such products include POLYVEST^{®} HT, which is a hydroxyl terminated liquid polybutadiene, manufactured by radical polymerization, having primary hydroxyl groups that are accessible for precise chemical modification. Typical applications include electrical insulations and potting compounds. Evonik also supplies POLYVEST^{®} EP MA 100, which is a maleic anhydride adduct of a low molecular weight cis-1,4-polybutadiene which has succinic anhydride groups randomly distributed along the polymer chains. Typical applications of POLYVEST^{®} EP MA 100 include electrical insulations and potting compounds (2-pack systems). These products may be combined to form a removable polybutadiene polyester potting compound, but this resin composition will be relative expensive.

US 2023/391991 discloses two-part curable compositions comprising a part A comprising RICON 130MA8 (low molecular weight polybutadiene functionalized with maleic anhydride) and a part B comprising PRIPOL 2033 (dimer diol), URIC H-30 (castor oil), BYK 108 (dispersant), fillers and antioxidants and tris 2-(ethylhexylamine) as a catalyst ([0124], tables 3 and 5).

EP 2 578 650 discloses compositions comprising RICON 130MA8 (low molecular weight polybutadiene functionalized with maleic anhydride), POLYVEST OC 800 S (maleic acid modified poly-butadiene), polybutadiene polyol, castor oil-based polyol, epoxy polyol, fillers and NANOBYK-3602 (dispersant) (tables 1-1 to 8-1). EP 2 587 549 discloses the same subject-matter (tables 1-7).

US 2003/092829 discloses a reaction of Polyvest C 150 (polycarboxylic anhydride of butadiene, maleic anhydride and succinic anhydride) with a polyester/polyether polyol (reaction product of soybean oil epoxide and methanol) in the presence of N-methyl imidazole as a catalyst (example X).

The need remains for a potting compound that is flexible, easy to apply, removable, affordable, and label-free. This rules out the three main potting compounds used in the electronics industry, based on epoxy, polyurethane, and silicone. Moreover, this requires an alternative to the resin based on POLYVEST HT.

### SUMMARY OF THE INVENTION

Accordingly, the present invention provides a multicomponent polyester resin composition as claimed in claim 1. It also provides encapsulated products and articles wherein the potting compound is used.

### DETAILED DESCRIPTION OF THE INVENTION

The potting compound according to the present invention can be applied in all applications where a potting compound is typically used. This includes encapsulation. As the potting compound of the present invention is relatively flexible, it will be easy to remove. Generally, and desirably, it has a shore A hardness in the range of 5 to 40, preferably in the range of 10-15. If the hardness is less than 5, then the potting compound may be too weak to provide protection. On the other hand, if the hardness is greater than 40, it will become increasingly difficult to remove the potting compound without damaging the encapsulated products. Preferably, the potting compound is translucent.

Typically, the compound is produced by mixing the multicomponent polybutadiene polyester resin composition, applying the mixed resin composition onto the product that is to be protected and/or introducing the mixed resin composition into a housing comprising one or more electric cables and allowing the mixed polyester resin composition to cure. Typically the polybutadiene polyester potting compound comprises at least one A-component comprising one or more polyols and at least one B-component comprising one or more polyacids and/or anhydrides thereof. The mixing of the at least one A-component and the at least one B-component may be done manually, e.g., as in a kneading pack, or with the aid of a pump. Depending on the viscosity of the mixture, the mixed resin composition may be poured, hand-pressed, or pumped into the housing comprising one or more electric cables, thus forming a cable joint or termination.

The viscosity of each component in the multicomponent resin composition is preferably less than 5000 mPa.s at 25°C. Indeed, when the components of the multicomponent resin composition are mixed, the viscosity of the mixture is preferably less than 4000 mPa.s, more preferably less than 3000 mPa.s, ideally between 1000 and 2500 mPa.s at 25°C. If thixotropic agents are added, then the lower limit may even be less than 1000 mPa.s at 25°C.

For the resin to cure, at least one of the components consists or comprises a catalyst. It is convenient to combine the catalyst with one of the A-components and/or one of the B-components. By doing so, the catalyst is always available in the appropriate amount. Typically, the potting compound is based on a 2 component resin composition.

The current inventors found that a nearly label-free potting compound could be produced with the appropriate hardness, whilst combining with a time to cure in about 40 minutes. Only a single symbol for the catalyst, which is used in minute amounts, need to be applied.

### A-Component

The inventors found that the expensive POLYVEST HT could be preplaced without affecting the properties of the potting compound. To achieve the same properties whilst maintaining the low viscosity and the fast curing time, a new formulation was developed.

Suitably the A component further includes a crosslinking agent; a dispersant; a plasticizer; a catalyst and additional additives including stabilizers, antioxidants and/or colorants. It should be realized that the combination of so many components effects the time to cure, but also the hardness of the final cured resin. It may also include a filler, to achieve hardness and maintain a reasonable cost.

Suitably, the A-Component comprises:
50-80 wt.% partially dehydrated vegetable oil with a viscosity in the range of 4000 - 5500 mPa.s (DIN EN ISO 3219) and with a hydroxyl number of 110 to 125 mg KOH/g (DIN EN ISO 4629-2);
0-20 wt.% one or more fillers
15-25 wt.% of one or more crosslinking agents;
0.8-1.2 wt.% of one or more dispersants;
1.7-2.1 wt.% of one or more curing agents:
   0.5-1.0 wt.% of one or more catalysts, and
   0.0-3.0 wt.% of antioxidant,
adding up to 100 wt.% and calculated as weight on the A-Component.

A suitable hydroxyl-terminated liquid polybutadiene is VEOPUR 240120. It is preferably used in an amount of 72-78 wt.%, more preferably in an amount of about 75 wt.%.

For instance, the filler may be CaSiO₃ (Wollastonite), available as Tremin^{®} 939-100. Note that a combination of fillers may be used as well. On the other hand, it is preferable to avoid fillers if the electronic components need to remain visible.

The crosslinking agent can be any agent with multiple functional groups that provides additional linkages in the cured resin. Such functional groups may include 3 or more hydroxyl groups or 3 or more amine groups or a combination of 3 or more hydroxyl groups and amine groups. It may also be a combination of crosslinking agents with a high number of functional groups at a low molecular weight, in order to optimize the hardness of the potting compound For instance, silane amines are very suitable. A suitable crosslinking agent is 3-aminopropyltriethoxysilane, available as DYNASYLAN^{™} AMEO. If a silane amine is used, then the amount is preferably in the range of 1.6-2.0 wt.%, more preferably about 1.9 wt.%. In addition, the crosslinking agent can be a polyol, e.g. a 1000 MW polycaprolactone polyol tetrol initiated with pentaerythritol. This product is available as CAPA^{™} 4101 from Ravago. If this product is used, then the amount is preferably in the range of 17 to 20 wt.%, more preferably about 18.7 wt.%. The polyol may be further combined with another polyol, to optimize the viscosity of the resin composition. For instance, an amine initiated polyether polyol may be used, . VORANOL^{™} 800 Polyol available from DOW, for instance, has an average OH number of 798 mg KOH/g, a molecular weight of 281 g/mol and a nominal functionality of 4. This can be blended with the other crosslinking agents. If this product is used, then the amount is preferably in the range of 0.8-1.0 wt.%, more preferably about 0.9 wt.%. Ideally, a combination of DYNASYLAN^{™} AMEO, CAPA^{™} 4101 and VORANOL^{™} 800 is used.

As dispersant for instance Omnivadd^{™} XP 5844 or similar wetting and dispersing agents, such as Tego^{™} Dispers 650, may be used. Preferred amounts are in the range of 0.8-1.0 wt.%, more preferably about 0.9 wt.%

Common catalysts for polyester resins may be used. The inventors found TMEDA to be a very suitable catalyst, commercially available as Bulab^{™} 600. Suitably, the amount is in the range of from 0.8-1.0 wt.%, more preferably about 0.9 wt.%

The antioxidant is a common additive and may be present. Generally it is present in an amount of from 1.6 to 2.0 wt%, more preferably about 1.9 wt%.

Ideally, the A-Component has a viscosity in the range of 1000-3000 mPa.s at 25°C, preferably in the range of 1100-2500 mPa.s at 25°C, more preferably in the range of 1200-2000 mPa.s at 25°C.

### B-Component

The B-Component preferably comprises at least one maleic anhydride adduct of a low molecular weight cis-1,4-polybutadiene (i.e., a liquid polybutadiene, which typically has a molecular weight in the range of 2,000 to 50,000, preferably in the range of 2,000 to 5,000) which has succinic anhydride groups randomly distributed along the polymer chains. Preferably this adduct has a viscosity in the range of 10,000 -16,000 mPa.s (DIN EN ISO 3219) and with an acid number between 95-115 mg KOH/g (DIN EN ISO 2114). The B-component may be used as such, but it may also include one or more plasticizers, to reduce the viscosity. It may comprise additional additives including stabilizers, antioxidants and/or colorants.

Suitably, the B-Component comprises:
70-100 wt.% maleic anhydride adduct of a liquid polybutadiene,
0-30 wt.% plasticizer; and
0-5 wt.% stabilizers, antioxidants and/or colorants,
adding up to 100 wt.% and calculated as weight on the B-Component.

A suitable maleic anhydride adduct of a low molecular weight cis-1,4-polybutadiene is POLYVEST^{®} MA 100, having a molecular weight of approximately 3,1000. It is preferably used in an amount of 90-100 wt.%, more preferably pure, as provided by Evonik.

A plasticizer may be used. For instance, a suitable plasticizer is Sovermol^{®} 1058. If included, then the plasticizer is preferably used in an amount of 5-10 wt.%. Also, a combination of plasticizers may be used.

Ideally, the B-Component has a viscosity in the range of 2500-5000 mPa.s at 25°C, preferably in the range of 3000-4000 mPa.s at 25°C, more preferably in the range of 3250-3600 mPa.s at 25°C.

To produce the resin composition, the A-Component and the B-Component are mixed. They may be mixed at various amounts. For instance, on one part by weight of A-Component from 0.5-4 parts by weight of the B-Component may be used. Preferably, on one part by weight of the A-Component from 0.75-1.5 parts by weight of the B-component is used. More preferably, on one party by weight of the A-Component about 1 part by weight of the B-Component is used.

Only the catalyst component in the above resin composition requires the presence of a warning on the label, which is a significant improvement vis-à-vis potting compounds based on epoxy components, isocyanate components or silicones.

A potting compound was prepared by mixing a 2 component resin composition based on the preferred embodiment described above. The resin composition provides an environmentally friendly and removable 2-component cold sealant based on hydrocarbon resins. The resin composition complies with CLP Regulation (EC) No 1272/2008 and does not contain hazardous raw materials, with the exception of minute amounts of the catalyst component.

The potting compound is transparent and allows visual inspection after casting. The electronic components remain accessible by removing the potting compound. Areas of application include junction boxes, junction boxes, telecommunications cable connections and electronic components.

### Characteristics:

- Excellent electrical insulation properties
- No identification requirement for hazardous substances in accordance with CLP Regulation (EC) No. 1272/2008
- Isocyanate and silicone free
- Removable
- Transparent, even after curing
- Good casting properties
- Low volume shrinkage
- No cracking under electrical load
- Excellent adhesion to all cable materials
- Halogen-free
- Cold curing (without heat development during the reaction)
- The resin is of the same quality as that of the competitor, but at a significantly lower price.

### Example

Suitable formulations for cable joint or termination can be produced in accordance with the formulation set out in Table 1. All amounts are in parts by weight.

In the comparative example CE1, a formulation is provided based on the more expensive Evonik components. In the example according to the invention, E1, the same result is achieved in terms of Hardness and ease of application..

**Table 1**

| Ingredient | Name | Supplier | CE1 | E1 |
|---|---|---|---|---|
| B component | | | | |
| maleic anhydride adduct of a low molecular weight cis-1,4-polybutadiene | Polyvest EP MA 100 | Evonik | 80 | 80 |
| Polyol | Sovernol 1058 | BASF | 20 | 20 |
| Total amount component B | | | 100 | 100 |
| Viscosity component B (mPa.s. @ 25°C) | | | 3,500 | 3,500 |

| A component | | | | |
|---|---|---|---|---|
| Hydroxl terminated polybutadiene | Polyvest^{®} HT | Evonik | 57.25 | |
| Filler | Tremin 939-100 | Quarzwerke | 19.1 | |
| Polyol | Sovernol^{™} 1058 | BASF | 20.04 | |
| Castor oil based polyol | VEOPUR^{™} 240120 | Harke | | 74.83 |
| Polyol tetrol | CAPA^{™} 4101 | Ravago | | 18.71 |
| Polyol | Voranol^{™} RA 800 | Brenndag | | 0.91 |
| Curing agent | DYNASYLAN AMEO | Evonik | 1.91 | 1.87 |
| Catalyst | Bulab^{™} 600 | Evonik | 0.57 | 0.91 |
| Anti-oxidant | RIANOX^{™} L135 | Rianlon | | 1.87 |
| Disperging agent | Tego Dispers 650 | Evonik | 1.145 | |
| Dispersing agent | Omnivadd^{™} XP 5844 | ADD-Additiv | | 0.91 |
| | | | | |
| Total amount component A | | | 100 | 100 |
| viscosity component A mPa.s. @ 25°C | | | 5,000 | 1,500 |
| viscosity mixture A+B mPa.s. @ 25°C | | | 5,000 | 3,000 |
| Hardness Shore A | | | 10 | 10 |

## Claims

1. A multicomponent polyester resin composition, which comprises at least one A-Component that comprises at least one polyol, and at least one B-Component that comprises at least one maleic anhydride adduct of a cis-1,4-polybutadiene with a molecular weight in the range of 1,000 to 50,000 (DIN 55 627-1), which has succinic anhydride groups randomly distributed along the polymer chains, wherein the A-Component comprises:
50-80 wt.% partially dehydrated vegetable oil with a viscosity in the range of 400-1000 mPa.s at 25°C (DIN EN ISO 3219) and with a hydroxyl number of 110 to 125 mg KOH/g (DIN EN ISO 4629-2);
0-20 wt.% of one or more fillers;
15-25 wt.% of one or more crosslinking agents;
0.8-1.2 wt.% of one or more dispersants;
1.7-2.1 wt.% of one or more curing agents:
0.5-1.0 wt.% of one or more catalysts, and
0.0-3.0 wt.% antioxidant,
adding up to 100 wt.% and calculated as weight on the A-Component.

2. The multicomponent polyester resin composition of claim 1, wherein the partially dehydrated vegetable oil is a partially dehydrated castor oil.

3. The multicomponent polyester resin composition of claim 1 or 2, wherein the A-Component has a viscosity in the of 1000-3000 mPa.s at 25°C, preferably in the range of 1100-2500 mPa.s at 25°C, more preferably in the range of 1200-2000 mPa.s at 25°C (DIN EN ISO 3219).

4. The multicomponent polyester resin composition of any one of the preceding claims, wherein the maleic anhydride adduct has a viscosity in the range of 10,000 -16,000 mPa.s (DIN EN ISO 3219) and an acid number between 95-115 mg KOH/g (DIN EN ISO 2114).

5. The multicomponent polyester resin composition of any one of the preceding claims, wherein the B-Component has a viscosity in the range of 2500-5000 mPa.s at 25°C, preferably in the range of 3000-4000 mPa.s at 25°C, more preferably in the range of 3250-3600 mPa.s at 25°C (DIN EN ISO 3219).

6. The multicomponent polyester resin composition of any one of the preceding claims, wherein the B-Component comprises:
70-100 wt.% maleic anhydride adduct of a cis-1,4-polybutadiene with a molecular weight in the range of 1,000 to 50,000, preferably 2,000 to 5.000 (DIN 55 627-1), 0-30 wt.% plasticizer; and
0-5 wt.% stabilizers, antioxidants and/or colorants,
adding up to 100 wt.% and calculated as weight on the B-Component.

7. The multicomponent polyester resin composition of any one of the preceding claims, which per one part by weight of A-Component(s) comprises from 0.5-4 parts by weight of the B-Component(s).

8. The multicomponent polyester resin composition of any one of the preceding claims, comprising a single A-Component and a single B-Component.

9. The multicomponent polyester resin composition of any one of the preceding claims, in the form of a kit comprising A-Component(s) and B-Component(s) in separate packages.

10. A method for sealing electric components, with a multicomponent polyester resin composition of as claimed in any one of claims 1-9, comprising combining A-Component and B-Component and applying the multicomponent polyester resin composition onto the electronic components and curing the same.

11. A removable polybutadiene polyester potting compound used for potting & encapsulating, based on the multicomponent polyester composition of any one of the claims 1-9.

12. The removable polybutadiene polyester potting compound of claim 11, having a shore A hardness in the range of 5 to 40, preferably in the range of 8-20, more preferably in the range of 10-15 (ASTM D2240).

13. An encapsulated product or and article, comprising the removable polybutadiene polyester potting compound of any of the claims 11-12.
